# EUROPEAN PATENT SPECIFICATION

(11) **EP 0 872 490 B1**
(45) Date of publication and mention of the grant of the patent: **17.05.2006**
(21) Application number: 98106804.2
(22) Date of filing: 15.04.1998
(51) Int. Cl.: C08F 8/00, C02F 1/56

(54) **High-molecular flocculant, method for producing the flocculant and water-treatment method employing the flocculant**
Hochmolekulares Flockungsmittel, Verfahren zu dessen Herstellung und Verfahren zur Wasserbehandlung mit diesem Mittel
Floculant à poids moléculaire élevé, son procédé de fabrication et procédé de traitement des eaux en utilisant ce floculant

(30) Priority: 16.04.1997 JP 9858497; 22.04.1997 JP 10406997
(43) Date of publication of application: 21.10.1998
(60) Divisional application: 03015023.9
(73) Proprietor: SONY CORPORATION, Tokyo (JP)
(72) Inventor: Inagaki, Yasuhito, Shinagawa-ku, Tokyo (JP); Watanabe, Haruo, Shinagawa-ku, Tokyo (JP); Noguchi, Tsutomu, Shinagawa-ku, Tokyo (JP)
(74) Representative: Müller, Frithjof E.

(56) References cited:
- EP-A- 0 105 201
- EP-A- 0 528 409
- EP-A- 0 716 882
- WO-A-91/18026
- DE-A- 4 239 128
- DE-C- 3 432 569
- FR-A- 2 308 663
- US-A- 3 345 344
- US-A- 3 948 870
- US-A- 4 526 935
- CHEMICAL ABSTRACTS, vol. 100, no. 8, February 1984 Columbus, Ohio, US; abstract no. 52243j, page 16; column 2; XP002071630 & JP 58 096 604 A (SANYO CHEMICAL INDUSTRIES, LTD.)

## Description

### BACKGROUND OF THE INVENTION

This invention relates to a high-molecular flocculant rendered water-soluble by conversion of cyano groups contained in a high-molecular material, a method for producing the flocculant, and method for efficiently processing water using the flocculant.

### Description of the Related Art

In the field of processing waste water, a flocculant is used as a reagent for causing aggregation and precipitation of micro-sized particles dispersed in waste water. In the waste water, such as industrial waste water, it is a frequent occurrence that mud or high-molecular impurities are dispersed as colloidal particles. The flocculant serves for aggregating these colloidal particles for purifying the polluted water.

US-A-4,526,935 discloses water soluble polyamines prepared by reacting in solution an acrylonitrile polymer containing at least 50 wt.% acrylonitrile units with a dialkylamino alkylamine. The polyamines are excellent flocculating agents (see the passages cited in the search report)

FR-A-2,308,663 discloses a process for preparing a poly(vinyl-imidazoline) (or its salt) composition as a dispersion in an inert oil, comprising reacting an acrylonitrile polymer with ethylene-diamine.The poly(vinyl-imidazoline) can further react with an acid. The dispersion is used as flocculating agent for treating industrial aqueous effluents and sludges (see the passages cited in the search report).

Of the wide variety of known flocculants, those having a molecular structure of a long chain and exhibiting high hydrophilicity are high-molecular flocculants which are used extensively because addition of only a limited amount thereof to the colloidal particles leads to significant aggregating effects. The high-molecular flocculants are classified into an anionic type, a cationic type and a nonionic type depending on static charges on dissolution in water. Since a majority of colloidal particles are charged to the positive or negative polarity, extremely large flocs are formed to lower the turbidity highly efficiently by properly selecting the high-molecular flocculants depending on the polarity of the static charges.

In the field of manufacturing industrial products, high-molecular material, containing acrylonitrile as a monomeric unit, are used extensively. Among the high-molecular materials containing acrylonitrile, there are polystyrene based resins, typified by nitrile resins, ABS (acrylonitrile- butadiene- styrene resins), SAN resins (styrene- acrylonitrile resin), AAS resins (acrylonitrile- acrylstyrene resins) and ACS resins (acrylonitrile- chlorinated polyethylene- styrene resin), acrylic fibers obtained on spinning a polymer having acrylonitrile as a main monomeric unit, and NBR (acrylonitrile- butadiene rubber, also termed nitrile rubber).

A resin molded product, containing acrylonitrile as monomeric units, is superior in stiffness, dimensional stability and workability and hence is used frequently as a cover or a casing for various usages, a casing for an electric appliance or a car or as a material for components.

The acrylic fibers are lightweight, bulky and is excellent in heat insulating properties, skin touch feeling, weatherability and resiliency, so that they are used extensively for apparel alone or as a mixture with other fibers, such as wool or cotton.

The nitrile rubber exhibits superior weatherability against oils, such as fuel oil, machine oil or a lube oil, so that it is used as a fuel hose, oil seal or a belt and in particular for car use.

The acrylonitrile containing high-molecular material, used in a wide variety of industrial products, produces a large quantity of waste materials in the course of fabrication of the industrial products or on discarding of the used-up industrial products. The waste high-molecular materials are generally disposed of by techniques such as incineration, earth filling or re-melting. The former two technique belongs to discarding, while the later technique belongs to recycling.

The above-mentioned disposal techniques for the high-molecular material suffer from specified problems.

First, the incineration is accompanied by the problem of evolution of toxic gases during combustion of the waste material. That is, highly toxic cyan gas (HCN) is evolved due to cyano groups (-C=N) contained in the acrylonitrile monomer unit and which constitutes one of side chains of the polymer. Another factor contributing to incineration difficulties is susceptibility to conversion into incombustible matter as a result of carbonization.

Re-melting is a technique of heat-melting the recovered waste material for re-molding, and represents an effective technique insofar as thermoplastic resins are concerned. However, the material tends to be deteriorated in quality due to lowering in the molecular weight or oxidation, while being liable to mixing of foreign matter, such as dust and dirt. If waste materials of different originating points are processed collectively, technical and cost problems are raised, such as the necessity of re-coloring due to coexistence of various coloring agents.

Thus, discarding by land filling is nowadays thought to be most proper measures. However, selection and procurement of the proper site for a processing plant is becoming difficult from year to year, while the problem of environmental pollution cannot be evaded without difficulties.

### SUMMARY OF THE INVENTION

It is an object of the present invention to provide a method for manufacturing a high-molecular flocculants having superior flocculating properties by a simple and safe manner using the high-molecular material containing cyano groups as a starting material and a method for effective disposal of waste water employing this high-molecular flocculant.

The high-molecular flocculant of the present invention, proposed for accomplishing the above object, is such a flocculant in which at least a portion of cyano groups (-C≡N) contained in the high-molecular material is converted to impart water-solubility to enable the use of the material as a flocculant.

Specifically, a high molecular flocculant is provided by adding a polyamino having two or more amino groups to at least a portion of the cyano groups to that the molecular structure portion having the polyamino added thereto includes an imidazoline ring.

In particular, if a used-up waste material from some other process is used as a high-molecular material for use as a starting material, resources can be exploited effectively by recycling thus contributing to environment conservation.

The high-molecular flocculant, thus obtained, can be injected into water for processing for water processing as a cationic or nonionic type high-molecular flocculant. It may also be used in conjunction with other nonionic, anionic or cationic high-molecular flocculant.

It is seen from above that the high-molecular flocculant according to the present invention is obtained as a result of hydrophilicity-imparting modification of the high-molecular material containing cyano groups, in particular cyano groups originating from acrylonitrile. Since the high-molecular material is likely to be produced in large quantities as industrial wastes, the present invention is highly effective in reducing toxic waste materials and effective utilization of resources.

Moreover, since this modification of the high-molecular material is achieved by addition of an amino compound there is caused no problem such as emission of toxic gases during incineration thus evading the problem of new environmental pollution in the course of processing of waste materials. In addition, the high-molecular flocculant obtained as a result of processing of the waste materials exhibits superior properties in connection with the rate of flocculation, turbidity of the supernatant liquid or in the water content of the cake. Therefore, use of the high-molecular flocculant obtained as a result of processing of the waste materials, for water processing, leads to re-utilization of the usually discarded waste materials, thus contributing not only to reduction of the toxic waste materials and effective utilization of resources, but to environmental conservation through purification of waste water.

### BRIEF DESCRIPTION OF THE DRAWINGS

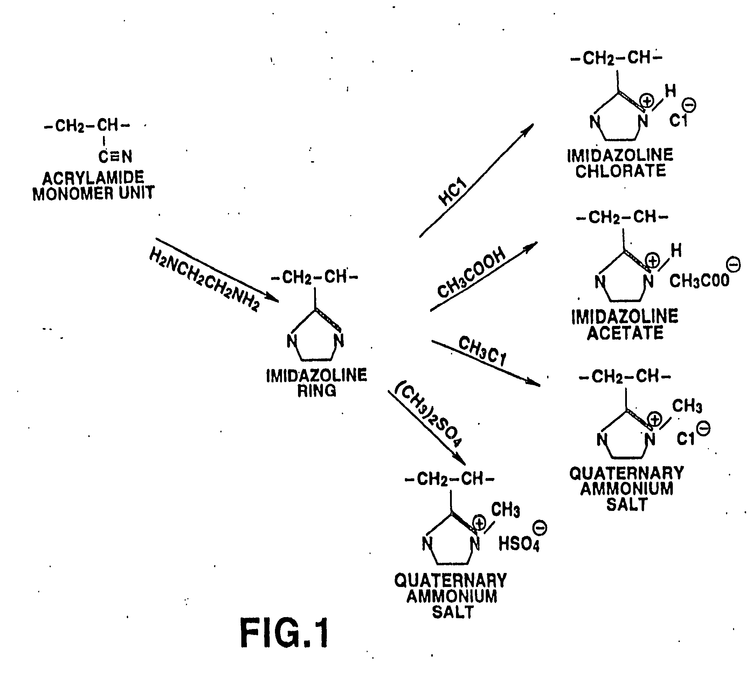

Fig. 1 illustrates the mechanism for addition reaction, salt forming reaction in connection with manufacture of a high-molecular flocculant of the present invention.

### DESCRIPTION OF PREFERRED EMBODIMENTS

The high-molecular flocculant of the present invention is obtained by introducing a highly hydrophilic molecular structure into at least a portion of cyano groups inherently contained in the high-molecular material or by subsequently carrying out salt formation in case of necessity for adjusting water-solubility or flocculating properties. If it is desired to impart sufficient hydrophilicity to the yielded high-molecular flocculant or to preclude yielding of hydrogen cyanide with a view to safe waste discarding, it is preferred that the majority of cyano groups shall be converted into a highly hydrophilic molecular structure portion.

The highly hydrophilic molecular structure portion may be exemplified by a molecular structure portion having added organic amino compounds.

The organic amino compounds are primary or secondary amines containing two or more amino groups in one molecule.

Polyamine compounds, in particular ethylene diamine or 1, 3-propane diamine, are preferably used for reaction with the high-molecular material since the polyamine compound can yield an imidazoline ring by reaction with cyano groups.

The molecular structure portion, yielded by addition of an organic amino compound, has an imidazoline structure, and exhibits basicity due to the lone electron pair on the nitrogen atom.

If this nitrogen atom is linked by coordinate bond to a proton furnished from the inorganic or organic acid, the nitrogen atom is charged positively to yield an acid salt. An inorganic acid, such as sulfuric acid, chlorosulfonic acid, chloric acid, nitric acid or phosphoric acid may be used. As an organic acid, acetic acid, lactic acid, phthalic acid or phenols may be used.

If a halogenated hydrocarbon or sulfuric acid ester is given the molecular structure portion, the nitrogen atom of the molecular structure portion is linked to the hydrocarbon group of sulfuric acid ester or the halogenated hydrocarbon so as to be charged positively to yield a quaternary amine salt having the halogen as paired ions. The halogenated hydrocarbon used at this time mat be enumerated by methyl chloride or benzyl chloride, while the sulfuric acid ester may be enumerated by dimethyl sulfide or diethyl sulfide.

These acid salts and quaternary ammonium salts exhibit high water solubility.

The molecular structure portion yielded on addition of ethylene diamine, to the cyano group of the acrylonitrile monomer unit is shown in Fig.1, along with structures obtained on yielding of the imidazoline ring by the action of acid salts, quaternary ammonium salts yielded on hydrolysis.

The above-mentioned high-molecular material are copolymers with other monomeric units (copolymers) without being limited to acrylonitrile homopolymers.

The copolymers of acrylonitrile which are used to prepare the high molecular flocculant of the present invention are SAN resins (styrene- acrylonitrile resins), acrylonitrile- butadiene resins, acrylonitrile- butadiene- styrene resins, acrylonitrile- butadiene-acrylic resins, acrylonitrile- chlorinated polyethylene resin, nitrile rubber and acrylonitrile- butadiene rubber.

The high-molecular material, which is a acrylonitrile copolymer, has a content of the cyano groups varied depending on the content of the acrylonitrile monomer unit.

According to the present invention, it is preferred that the cyano groups be contained in the high-molecular material in an amount corresponding to not less than 15 mol% of the total monomer units, that is that the content of the acrylonitrile monomer units be not less than 15 mol%. This amount is preferably not less than 25 mol%.

Meanwhile, the high-molecular material has the weight average molecular weight (Mw) of approximately not less than 5000. If the molecular weight is lower than this limit value, the flocculating properties as the high-molecular flocculant tend to be lost.

The high-molecular material, as the starting material for the high-molecular flocculant according to the present invention, may, of course, be a newly prepared material, that is a so-called virgin material. However, from the viewpoint of effective utilization of natural resources and prevention of environmental destruction, it is particularly desirable to use a used-up waste material.

These waste materials may be exemplified by, for example, a casing, a cover or a vessel used in electric appliances, cars, stationery, measurement instruments, building materials or in cosmetics. The waste materials may be in the form of a mixture with other waste materials. Examples of these other waste materials include synthetic or natural fibers, such as polyester, nylon, polyurethane, polyamides, polyphenylene ether, polycarbonates, polyphenylene sulfide, polyethylene terephthalate, polybutylene terephthalate, silk, wool or cotton, occasionally containing a variety of additives, such as coloring agents, stabilizers, water retention agents, combustion retardants, plasticizers or fillers.

If the above-mentioned other waste materials are used in conjunction, the content of these other waste materials is preferably not more than 60 wt%. If the content exceeds 60 wt%, the effect of the functional groups is strongly demonstrated such that desired water solubility is occasionally not imparted to the yielded high-molecular flocculant.

Thus, although the waste materials may be those recovered from factories, retail stores or homes, the waste materials from factories or retail stores, where waste materials of the unitary composition are likely to be produced in larger quantities, are more desirable than those recovered from holes and in which foreign waste materials tend to be mixed more readily.

Turning to the method for producing the high-molecular flocculant of the present invention, if the high-molecular flocculant has a molecular structure portion comprised of organic polyamino compounds added to at least a portion of the cyano groups contained in the high-molecular material, it is sufficient if the above-mentioned acrylonitrile copolymer is used as a starting material and is reacted with the organic polyamino compounds.

This reaction can be carried out by directly injecting the starting material into the amino compounds. After the end of the reaction, it is possible to pour a solvent in which the high-molecular flocculant is not soluble, such as acetone, into the reaction mixture in large quantities to re-precipitate the product.

Alternatively, the reaction can be carried out in an organic solvent, which may be a C5 to C20 aliphatic chain hydrocarbon and/or cyclic hydrocarbon, C1 to C4 halogenated hydrocarbons, dichlorobenzene, aromatic hydrocarbons, ethers, ketones, esters, or non-protonic polar solvents, such as dimethyl sulfoxide (DMSO), dimethyl formamide (DMF), tetrahydrofuran (THF) or dioxane. If the organic solvent is used, the reaction product may be obtained as an aqueous solution by adding water to the reaction system and distilling off the solvent after the end of the reaction.

During the reaction, sulfur-based catalysts, such as sulfur powders, thiourea or thioacetoamide, are preferably used.

Although there is no limitation to the concentration of the amino compound during the reaction, it is preferably not lower than approximately 10%. If this concentration is too low, the speed of the addition reaction tends to be lowered, or the reaction of addition tends to be retarded. There is also no upper limit to the above concentration. If the reaction of addition is carried out by injecting a small amount of the high-molecular material into ethylene diamine, the concentration of ethylene diamine is approximately 100%.

The reaction temperature for the reaction of addition differs with the type of the high-molecular material used as the starting material, type of the catalyst used, type of the solvent used for the reaction system and with whether or not the solvent is used. If the reaction temperature is 0 to 150°C, the reaction is allowed to proceed with practically acceptable speed and controllability. If the temperature is lower than this range, the reaction speed is lowered thus possibly lowering the production efficiency. Conversely, if the temperature is higher than the above range, the high-molecular material tends to be lowered in molecular weight to lower the efficiency as the flocculant. This temperature range is preferably 20 to 120°C and most preferably 40 to 80°C.

As for the reaction time duration, which depends on the type of the amino compound used, the reaction time of 30 minutes to 50 hours can give a target product with a practically acceptable yield. If the reaction time duration is shorter than this range, sufficient modification cannot be achieved. However, if once the chemical equilibrium is reached, prolongation of the reaction time has no meaning.

If, in the present invention, hydrolysis is to occur after the addition reaction of the amino compound, it can be carried out by acid hydrolysis employing an acid catalyst or alkali hydrolysis employing a basic catalyst.

As the acidic catalyst for acidic hydrolysis, inorganic acids, such as sulfuric acid, sulfuric anhydride, fuming sulfuric acid, chlorosulfonic acid, hydrochloric acid, nitric acid or phosphoric acid, may be used. These inorganic acids may be used in conjunction with inorganic peroxides, such as aqueous hydrogen peroxide, in order to promote the hydrolytic reaction.

As the basic catalyst for the alkaline hydrolysis, hydroxides, hydrogen carbonates, carbonates or acetates of Li, Na, K or NH₄ may be used.

In any type of the alkaline hydrolysis, the high-molecular material may be directly injected into inorganic acids, or into an aqueous alkaline solution of an inorganic base. Alternatively, the hydrolysis may be carried out using the same solvent as that used for the above-mentioned reaction of addition. The catalyst concentration, reaction temperature or the reaction time for hydrolysis may be set equivalently to the respective ranges discussed in connection with the above-mentioned reaction of addition.

The high-molecular flocculant, resulting from the above process, is of the nonionic type in the stage in which it has acquired the molecular structure portion directly after addition of the amino compound, and is of the strong cation type on converting this molecular structure portion into an acid salt or a quaternary ammonium salt. That is, with the above-described manufacturing method of the high-molecular flocculant, it is possible to produce flocculants of the nonionic type and the cationic type by judiciously selecting and combining the stages of the progress of the reaction of addition and the salt-forming reaction.

Since the high-molecular flocculant of the present invention is at any rate of the nonionic, cationic or anionic type, it may be used for water processing in accordance with the usual method of exploiting the nonionic, cationic or anionic type high-molecular flocculant. Alternatively, the high-molecular flocculant of the present invention may be used in conjunction with various other flocculants.

The usable nonionic high-molecular flocculants may be exemplified by a synthetic system, such as polyacrylic amide, polymethacrylic amide or polyoxyethylene, or natural systems, such as starch, guar gum, gelatine or the like sugar, or proteins.

The cationic high-molecular flocculants include quaternary products of dialkyl aminoalkyl (meth)acrylate, where the quaternarification agents include methyl chloride, dimethyl sulfate and benzyl chloride, or acid salts thereof, where acid salts include inorganic acid salts, such as hydrochlorates or sulfates, and organic acid salts, such as acetates, polymers or copolymers thereof with (meth)acrylamide such as polymers of methyl chloride quaternary product of dimethyl aminoethyl acrylate or a copolymer thereof with acrylic amide. The cationic high-molecular flocculants also include quaternary product of dialkyl aminoalkyl (meth)acrylic amide or an acid salt thereof, and polymers or copolymers thereof with (meth)acrylic amide, such as copolymer of methyl chloride quaternary product of dimethyl amino propyl and acrylic amide. The cationic high-molecular flocculants also include cationated modified product of polyacrylamide , such as Mannich modified product and Hoffman decomposition product of polyacrylamide, and an epihadrin-amine condensates, such as a polycondensate of epihadrin and C2 to C6 alkylene diamine. The cationic high-molecular flocculants also include polydimethyl diallyl ammonium chloride, polyvinyl imidazoline and/or salts thereof, dicyan diamide condensates, such as a formalin condensate of dicyanamide and ammonium chloride. The cationic high-molecular flocculants also include polyethylene imine, its quaternary product or acid salts thereof polyvinyl imidazole, its quaternary product or acid salts thereof, poly-4- vinyl benzyl trimethyl ammonium chloride, chitosan and its salts. The cationic high-molecular flocculants also include acidic hydrolyzates of N-vinyl formamide/ acrylonitrile copolymer, its quaternary product or acid salts, polyvinyl pyridine and tis quaternary product or acid salts. The cationic high-molecular flocculants further include an alkylene dichloride and polyalkylene polyamine condensates, aniline- formaldehyde polycondensates, polyhexameythylene thiourea acetate, polyamino acids, such as polylysin, polyglutamic acid and its salts.

The anionic high-molecular flocculants include partial hydrolyzates of polyacrylic amide and polymethacrylic amide, copolymers of acrylic acid or methacrylic acid and acrylic amide or methacrylic amide and salts thereof. The anionic high-molecular flocculants also include acrylic acid or methacrylic acid and acrylic amide or methacrylic amide and 2-acryl amide- methyl propane sulfonic acid or vinyl sulfonic acid ternary copolymer and salts thereof. The anionic high-molecular flocculants also include sodium salts of alginic acid, Guar gum, carboxymethyl cellulose and starch, polystyrene sulfonic acid and salts thereof. The anionic high-molecular flocculants further include sulfonated products and salts of polystyrene-based resin waste materials, such as polystyrene, high-impact polystyrene, ABS resin, SAN resin, nitrile rubber. The waste materials may contain up to 60 wt% of polyphenylene ether, polycarbonates, polyethylene terephthalates, polyamides and polyphenylene sulfide.

Of these high-molecular flocculants, sulfonated styrene-based polymers are desirable in that these exhibit high clarifying effect for a liquid suspension and can be fabricated using waste materials as the high-molecular flocculant f the present invention.

Examples of the styrene-based polymers used for the high-molecular flocculants include styrene- butadiene, styrene-acrylonitrile, styrene- butadiene- acrylonitrile, styrene- (meth)acrylic acid, styrene- (meth)acrylate (aliphatic hydrocarbon having 1 to 4 carbon atoms), styrene- acrylonitrile- (meth)acrylate (aliphatic hydrocarbon having 1 to 4 carbon atoms), styrene- butadiene-(meth)acrylate (aliphatic hydrocarbon having 1 to 4 carbon atoms), styrene- maleic anhydride, styrene- acrylonitrile (meth)acrylate (aliphatic hydrocarbon having 1 to 4 carbon atoms), styrenebutadiene- acrylonitrile and styrene- maleic anhydride. Preferred are styrene- butadiene, styrene- acrylonitrile, styrene- butadiene-acrylonitrile, styrene- maleic anhydride, styrene- acrylonitrile-(meth)acrylic acid ester (aliphatic hydrocarbon having 1 to 4 carbon atoms) and styrene- butadiene- (meth)acrylate (aliphatic hydrocarbon having 1 to 4 carbon atoms). Most preferred are styrene- butadiene, styrene- acrylonitrile, styrene- butadiene- acrylonitrile, styrenemaleic anhydride.

The above-mentioned styrene-based polymers may be a newly prepared material, that is a so-called virgin material, for producing the high-molecular flocculant, waste materials from factories, retail stores or homes (waste materials) or the combination of the virgin material and the waste material. For re-exploitation of the polystyrene-based resin products, manufactured in large quantities as general-purpose resins, and for maintaining the earth's environments, it is more desirable to use the waste materials rather than the virgin materials, as the styrene-based polymers.

If the waste materials are used, polymers other than the above-mentioned styrene-based polymers may be contained in addition to the styrene-based polymers. These other polymers may be exemplified by polyphenylene ether, polycarbonates, polyphenylene sulfides and polyethylene terephthalates. Most preferred are polyphenylene ether and polycarbonates. The content of these other polymers is preferably not more than approximately 60 wt%.

The above-mentioned styrene-based polymers are sulfonated in a solvent containing sulfonating agents. The sulfonated styrene-based polymer is converted into high-molecular flocculant by neutralizing the sulfone groups and subsequently distilling off the solvent and the sulfonating agent.

These sulfonating agents may be enumerated by sulfuric anhydride, fuming sulfuric acid, chlorosulfonic acid and concentrated sulfuric acid. These sulfonating agents may be used alone or in combination. As for the amount of addition of the sulfonating agents, these may preferably be used in an amount of 0.5 to 2 mols and more preferably in an amount of 0.7 to 1.5 mol to 1 mole of the aromatic ring contained in the styrene-based polymer (benzene ring in a side chain for a styrene-based resin and a benzene ring in the main chain for a polycarbonate resin). If added in an excessively small amount, the sulfonation agent cannot sufficiently sulfonate the styrene-based polymer. Thus, in such case, the high-molecular flocculant cannot display its function as the high-molecular electrolyte. Conversely, if added in an larger quantity, gelated products are yielded during the sulfonating reaction or by-products, such as salts, are yielded in larger quantities. Therefore, in this case, a large quantity of impurities are contained n the high-molecular flocculant, thus lowering its purity.

For sulfonating the strene-based polymer, the above-mentioned sulfonating agent may be used in conjunction with the Louis acid, which may be enumerated by alkyl phosphate, such as triethyl phosphate or trimethyl phosphate, dioxane, acrylic anhydride, ethyl acetate, ethyl palmitate diethyl ether and thioxane. The amount of addition of the Louis acid is 0.01 to 2.0 mol and preferably 0.02 to 1.0 mol of the aromatic ring contained in the styrene-based polymer (benzene ring in a side chain for a styrene-based resin and a benzene ring in the main chain for a polycarbonate resin). If added in an excessively small amount, gelated products tend to be yielded during the sulfonating reaction. If conversely the Louis acid is added in an excessive amount, the sulfonating reaction itself is retarded to lower the yield of the high-molecular flocculant to raise production cost.

The solvent used for sulfonating the styrene-based polymers may be enumerated by C1 to C2 aliphatic halogenated hydrocarbons (preferably 1,2- dichloroethane, chloroform, dichloromethane and 1,1- dichloroethane), and aliphatic cyclic hydrocarbons, preferably cyclohexane, methyl cyclohexane and cyclopentane. These solvents may be used alone or as a mixture. Im mixing the solvents, there is no particular limitation to the mixing ratio.

The above-mentioned solvents may be used as a mixture with other solvents. These other solvents may be enumerated by paraffinic hydrocarbons (with 1 to 7 carbon atoms), acetonitrile, carbon disulfide, tetrahydrofuran, tetrahydropyrane, 1, 2- dimethoxy ethane, acetone, methylethylketone and thiophene. Preferred of the other solvents are C1 to C7 paraffinic hydrocarbons, tetrahydrofuran, acetone and acetonitrile. Although there is no particular limitation to the mixing ratio with the other solvents, the mixing ratio is preferably in a range o 1 to 100 vol%. The above-mentioned solvents may be recovered, such as by extraction or distillation, after the end of the sulfonating reaction of the styrene-based polymer, for re-use in the next sulfonating reaction.

The above-mentioned anionic high-molecular flocculant can be obtained on mixing pre-set amounts of the sulfonating polymers, sulfonating agents and the solvent and continuing the sulfonating reaction.

In the course of the sulfonating reaction, the concentration of the styrene-based polymer is preferably 0.1 to 30 wt% and more preferably 0.5 to 20 wt%. If the concentration is lower than this range, it becomes difficult to introduce sulfone groups. If conversely concentration is lower than this range, gelated products tend to be yielded during the sulfonating reaction or non-reacted substances are yielded in large quantities.

The reaction temperature for this sulfonating reaction is 0 to 100°C and preferably 15 to 80°C. If the reaction temperature is lower than this range in the sulfonating reaction, the sulfonating reaction is less liable to occur thus lowering the yield of the high-molecular flocculant.

In addition, in the present sulfonating reaction, the reaction time duration, exclusive of the sulfonating agent dripping time, is 10 minutes to 10 hours and preferably 30 minutes to 5 hours.

After the end of the sulfonating reaction of the solution, the sulfone groups are neutralized by a neutralizing agent and subsequently the solvent is distiled off to yield the desired high-molecular flocculant.

The neutralizing agent may be enumerated by oxides, hydroxides, carbonates, acetates, sulfonates, phosphates of basic compounds, such as alkali metals (sodium, lithium or potassium), alkali earth metals (magnesium or calcium), ammonia and a variety of amine compounds (primary to tertiary alkyl amines). This neutralizing agent is gradually added to the reaction system in the state of a solid or an aqueous solution to neutralize the sulfone groups introduced into the styrene-based polymer. The techniques for distilling off the solvent may be the techniques of liquid separation or distillation.

With the high-molecular flocculant of the present invention, thus obtained, its molecular weight Mw needs to be 150000 to 600000. If the molecular weight of the styrene-based polymer in the high-molecular flocculant is less than 150000, not only is the flocculant effect for the suspended substances in the liquid suspension lowered, but also the suspended substances are dispersed. Conversely, if the molecular weight of the styrene-based polymer is not less than 600000, the suspended substances are aggregated as coarse blocks such that optimum clarifying effects cannot be produced while the yielded cake is of high water content.

On the other hand, with the present high-molecular flocculant, not less than 40 mol% and preferably not less than 50 mol% of sulfone groups are introduced into the styrene-based polymer. If the content of the sulfone groups in the styrene-based polymer is smaller than 40 mol%, the high-molecular flocculant is lowered in solubility in water, thus significantly lowering the flocculant effect for the starting material in the liquid suspension.

For introducing a desired amount of sulfone groups, it is desirable for the styrene units to be contained in the styrene-based polymer in the high-molecular flocculant in an amount not less than 60 mol% and preferably in an amount not less than 80 mol%. If the amount of styrene units in the styrene-based polymer is less than 60 mol%, it becomes difficult to obtain the high-molecular flocculant having the above-mentioned amount of sulfone groups by the sulfonating reaction.

Besides these high-molecular flocculants, flocculants of natural origin may be used in conjunction with the high-molecular flocculant of the present invention. The flocculants of natural origin may be enumerated by 'moroheiya', its dried product and extracts, jelly-like portion of the tomato seeds, its dried product or extract.

The 'moroheiya' is an annual grass of the genus Corcorus of the class shinanoki cultivated in Arabian tropical areas such as Egypt, Syria, Jordan or Iran, and is used from old as food as green to yellow vegetables. The viscous acidic polysaccharides as main component of the moroheiya are used as flocculant.

Specifically, the flower, stalk, root or portions thereof of moroheiya are turned into paste which is used as the flocculant. Alternatively, the flower, stalk, root or portions thereof of moroheiya are dried and pulverized in a mixer to produce powders which are used as the flocculant. For drying the moroheiya, drying in the sun, air in shade, vacuum drying, hot air drying or freeze drying may be optionally employed.

The tomato is an annual plant of the class eggplant in the temperate zone and used from old as food as green to yellow vegetables. It is the jelly-like portion around the tomato seed that is used as the flocculant.

Specifically, the jelly-like portion around the tomato seed is pulverized directly or in the dried state by a mixer to produce powders which are used as the flocculant. For drying, the techniques similar to those for the moroheiya are used.

Further, the paste or powders of the moroheiya or the jelly-shaped portion around the tomato seed or its dried product are processed by extraction with water, warm water, hydrophilic organic solvents (alcohols, ethers, N,N-dimethyl formamide or dimethyl sulfoxide sugar, or mixtures thereof, to produce a liquid extract which is used as the flocculant. The liquid extract may also be fractionated or dried for use as the flocculant. The liquid extract may preferably be water or warm water.

The liquid extract may be re-precipitated in an organic solvent as a poor solvent or the re-precipitated product may further be dried for use as a flocculant.

The liquid extract may be freed from solid substances by filtration, if so desired.

The alkalis may be ammoniac water, various amine compounds, sodium hydroxide, potassium hydroxide, potassium hydroxide and sodium carbonate. The acids may be organic acids, such as lactic acid, butyric acid, acetic acid or formic acid, and inorganic acids, such as sulfuric acid, hydrochloric acid and nitric acid.

Of course, the viscous portion of moroheiya and around tomato seeds may directly be used as the flocculant. However, it is more effective to use the viscous portions as powders or liquid extract for facilitating the diffusion in the processing liquid (liquid suspension). Also, the viscous portions of moroheiya and around tomato seeds, processed with extraction with water, warm water or water-soluble organic solvents, are more meritorious than the directly dried viscous portions in flocculant effect per unit weight of the same solid substance.

If the polysaccharide component of moroheiya or the viscous portions around tomato seeds are pulverized or heated excessively, these components are lowered in flocculant activity due to the lowering of the molecular weight caused by cutting of the main and side chains or due to insolubility in water caused by the intramolecular cross-linking reaction.

The high-molecular flocculant of the present invention may be used in conjunction with any of the above-mentioned flocculants. If the high-molecular flocculant of the present invention is used in conjunction with reverse type high-molecular flocculants, special techniques need to be used for effective processing.

If, for example, the high-molecular flocculant of the present invention is charged positively, as when the high-molecular flocculant has a molecular structure portion added to with amino compounds such that it is converted to an acid salt or a quaternary ammonium salt, and if the high-molecular flocculant is used in conjunction with the above-mentioned anionic high-molecular flocculant, the two flocculants are of opposite polarities in water. Therefore, the flocculants are preferably used sequentially rather than as a mixture. Similarly, if the high-molecular flocculant of the present invention is charged positively, as when cyano groups are converted to carboxylic group via carbamoyl group, and if the high-molecular flocculant is used in conjunction with the above-mentioned cationic high-molecular flocculant, the two flocculants are of opposite polarities in water. Therefore, the flocculants are again preferably used sequentially rather than as a mixture.

If the two flocculants are used sequentially, any one of the cationic high-molecular flocculant and the anionic high-molecular flocculant may be charged first into water for processing. However, if the water for processing is sewage water, the cationic high-molecular flocculant is usually charged first, since the usual sewage water is generally processed with bactericidal treatment and hence the colloids are charged to negative polarity.

In the water processing method of the present invention, the high-molecular flocculant of the present invention may also be used in conjunction with inorganic flocculants or flocculation assistant agents.

The inorganic flocculants may be enumerated by aluminum sulfate, aluminum polychloride, sodium aluminate, ferrous chloride, ferric chloride, ferric sulfate, copper chloride, modified basic aluminum sulfate (LACS) and activated silica.

The flocculation assistant agents may, for example, be enumerated by slaked lime, sodium silicate, bentonite and flyash.

These ingredients are generally added in amounts of 0.001 to 2000 ppm and preferably 0.1 to 500 ppm, related to waste water, depending on the concentration of the starting material or the type of the dehydrating equipment.

Although there is no limitation to the type of the water for processing in accordance with the present invention, maximum effects can be produced when the water for processing is highly contaminated water, such as plant waste water having inorganic particles as the starting material.

The amount of addition of the high-molecular flocculant of the present invention to water for processing differs with the composition of the water for processing and with the combination with other starting material and the flocculation assistant agents. If the amount of addition is too small, the particles of the starting material cannot be flocculated sufficiently, whereas, if the amount is too large, the proportion of the high-molecular flocculant not contributing to flocculation is increased to lead to wastage of the high-molecular flocculant to give rise to renewed water contamination. The desirable range of addition is generally 0.001 to 2000 ppm and more preferably 0.1 to 500 ppm.

For processing waste water using the high-molecular flocculant of the present invention, coagulating agents, chelate resins, chelating agents, activated charcoal, ozonized water, ion exchange resins, water-absorptive resins, aqueous hydrogen peroxide, chlorine, liquid chlroline, sodium hypochlorite, chlorine dioxide, bleaching powder, chlorinated isocyan, diatomaceous earth, optical catalysts, such as titanium oxide, and biological processing agents, may be used.

Also, a variety of dehydrates, such as belt press dehydrator, centrifugal dehydrator or a screw press may be used. Dehydrated products, such as cakes, may be used for land filling using known techniques or converted into fuel or composts.

### EXAMPLES

The present invention is hereinafter explained with reference to illustrative Examples based on experimental results.

### [Modification of Cyano-Group Containing High-Molecular Waste Materials by Addition of Amino Compounds]

First, the high-molecular waste material containing cyano groups is reacted with amino compounds to produce a high-molecular flocculant in order to check into its properties. SAN (styrene- acrylonitrile) resin waste material:
waste material of 8 mm cassette casing (transparent portions) containing 40 mol% of acrylonitrile

SAN resin waste material was severed by a cutter type crusher into small-sized chips not larger than 16 mesh for use as starting material.

### Example

3.5 g of ethylene diamine. 0.03 g of sulfur powder and 1.0 g of small pieces of SAN resin waste were charged into 40 g of cyclohexane and stirred in situ to carry out an addition reaction at 60°C for four hours.

A solid substance precipitated on the bottom of the reaction vessel was taken out and dissolved. The resulting solution was poured into a large quantity of acetone and precipitated. The precipitate was then filtered and dried in vacuo at room temperature to yield a powder.

This powder was dissolved in water and methyl chloride was injected into the resulting mass. The resulting product was reacted at 40°C for two hours to yield an aqueous solution of methyl chloride quaternary salt polymer of imidazoline, while non-reacted methyl chloride was destilled off on heating.

This high-molecular flocculant was termed a high-molecular flocculant E which was of the cationic type.

### [Evaluation of Flocculant Performance]

The flocculant performance of high-molecular flocculant E was evaluated.

In the following set of test examples, the following flocculants were used with a view to comparison or use with the inventive products.
· Nonionic high-molecular flocculant H: commercial polyacrylamide · cationic high-molecular flocculant I: methyl chloride quaternary product of commercial polydimethyl amino ethyl acrylate (potent cationic type)
· anionic high-molecular flocculant J: commercial polyacryl amide partial hydrolyzate (mid anionic type)
· sulfonate of waste resin material K: sodium polystyrene sulfonate (starting material: expanded styrene, sulfonation ratio: 80 mol%)
· hydrolyzate L of waste fiber: polyacrylonitrile hydrolyzate (acrylic fibers processed with sodium hydroxide)
· flocculant M of natural origin: dried pulverized moroheiya leaves

A mixed sludge from a sewage processing plant (pH, 6.2, SS 2.5 wt%) was pit to a jar test.

First, 0.5 wt% per SS of a cationic high-molecular flocculant was added to the sludge being agitated by a jar tester and agitated for flocculation. If two sorts of the high-molecular flocculant were used as a mixture, the charged amounts of the flocculants were set to 0.2 wt% per SS. To the resulting product was further added 0.2 wt% of the anionic high-molecular flocculant per SS and agitated for flocculation.

The flocculated mass was then allowed to stand and measurement was then made of the rate of precipitation of suspended particles, turbidity of the supernatant liquid and the water content of the cake obtained on filtration. The measured results are shown in table 1.

**TABLE 1**

| | | | | |
|---|---|---|---|---|
| cationic flocculant | E | I | I | I |
| anionic flocculant | K | - | J | K |
| precipitation rate (m/h) | 44 | 24 | 29 | 27 |
| turbidity (ppm) | 25 | 43 | 36 | 33 |
| water content (%) | 71 | 77 | 76 | 75 |

It is seen from table 1 that the high-molecular flocculant of the present invention was superior to the conventional anionic flocculant in the rate of precipitation, turbidity of the supernatant liquid and in water content of the cake both when used in conjunction with the anionic flocculant.

## Claims

1. A high-molecular flocculant having a molecular structure portion comprised of a polyamine having two or more amino groups added to at least a portion of a cyano group contained in a high-molecular material, the high-molecular weight polymeric material being copolymers of acrylonitrile and other monomer units, wherein the high-molecular weight polymeric material is at least one of styrene-acrylonitrile resin, acrylonitrile-butadiene-styrene resin, acrylonitrile-styrene-acrylic resin, acrylonitrile-chlorinated polyethylene-styrene resin, nitrile rubber and acrylonitrile-butadiene rubber, wherein the molecular structure portion having the polyamine added thereto includes an imidazoline ring.

2. The high-molecular flocculant as claimed in claim 1, wherein at least a portion of the molecular structure portion forms a salt with one of an inorganic acid, a halogenated hydrocarbon and a sulfuric acid ester.

3. The high-molecular flocculant as claimed in claim 1, wherein said high-molecular weight polymeric material has the weight-average molecular weight of not less than 5,000.

4. The high-molecular flocculant as claimed in claim 1. wherein the cyano groups are contained in not less than 15 mol% of the monomer units.

5. The high-molecular flocculant as claimed in claim 1, wherein the high-molecular weight polymeric material contains acrylonitrile monomer unit not less than 15 mol% of the total monomer units.

6. The high-molecular flocculant as claimed in claim 1, wherein the high-molecular weight polymeric material is contained in a waste material of polymeric products used up for other purposes.

7. A method for producing a high-molecular flocculant comprising:
providing a quantity of waste material of polymeric products containing at least one high-molecular weight polymeric material being copolymers of acrylonitrile and other monomer units wherein the high-molecular weight polymeric material is at least one of styrene-acrylonitrile resin, acrylonitrile-butadiene-styrene resin, acrylonitrile-styrene-acrylic resin, acrylonitrile-chlorinated polyethylene-styrene resin, nitrile rubber and acrylonitrile-butadiene rubber having a molecular weight of not less than 5,000;
reacting said high-molecular weight polymeric material containing said cyano group with a polyamine having two or more amino groups: and
introducing a molecular structure portion having said amino compound added to at least a portion of said cyano group, wherein an imidazoline ring is formed as said molecular structure portion

8. The method for producing a high-molecular flocculant as claimed in claim 7, wherein one of an inorganic acid, an organic acid and a halogenated hydrocarbon is acted on said molecular structure portion for converting at least a portion of the molecular structure portion into a salt.

9. The method for producing a high-molecular flocculant as claimed in claim 7, wherein the cyano groups are contained in the high-molecular weight polymeric material in an amount corresponding to not less than 15 mol% of the total monomer units.

10. The method for producing high-molecular flocculant as claimed in claim 7, wherein the high-molecular weight polymeric material containing not less than 15 mol% of the total monomer units correspond to the acrylonitrile monomer unit.

11. The high-molecular flocculant as claimed in claims 1-6, wherein a high-molecular material contained in a waste material used up for other purposes is used as said high-molecular material.

12. A method for water processing comprising:
charging into water for processing a high-molecular flocculant according to any of claims 1-6.

13. The method for water processing as claimed in claim 12, wherein said high-molecular flocculant is used in conjunction with at least one of a nonionic high-molecular flocculant, an anionic high-molecular flocculant, and a cationic high-molecular flocculant.

14. The method for water processing as claimed in claim 13, further comprising:
sequentially charging said high-molecular flocculant and the anionic high-molecular flocculant into the water.

## Patentansprüche

1. Hochmolekulares Flockungsmittel mit einem Molekülstrukturabschnitt aus einem Polyamin mit zwei oder mehr Aminogruppen, zugegeben zu mindestens einem Teil (einer) Cyanogruppe(n), enthalten in einem hochmolekularen Material, wobei das Polymermaterial mit hohem Molekulargewicht Copolymere von Acrylonitril und anderen Monomereinheiten darstellt, worin das Polymermaterial mit hohem Molekulargewicht mindestens eines ist von Styrol-Acrylonitrilharz, Acrylonitril-Butadien-Styrolharz, Acrylonitril-Styrol-Acrylharz, Acrylonitril-chloriertes Polyethylen-Styrolharz, Nitrilgummi und Acrylonitril-Butadien-Gummi, worin der Molekülstrukturabschnitt mit dem hierzu gegebenen Polyamin einen Imidazolinring umfasst.

2. Hochmolekulares Flockungsmittel nach Anspruch 1, worin mindestens ein Teil des Molekülstrukturabschnitts ein Salz bildet mit einem von: Einer anorganischen Säure, einem halogenierten Kohlenwasserstoff oder einem Schwefelsäureester.

3. Hochmolekulares Flockungsmittel nach Anspruch 1, worin das Polymermaterial mit hohem Molekulargewicht ein gewichtsgemitteltes Molekulargewicht von nicht weniger als 5.000 aufweist.

4. Hochmolekulares Flockungsmittel nach Anspruch 1, worin die Cyanogruppen in nicht weniger als 15 Mol-% der Monomereinheiten enthalten sind.

5. Hochmolekulares Flockungsmittel nach Anspruch 1, worin das Polymermaterial mit hohem Molekulargewicht nicht weniger als 15 Mol-% der gesamten Monomereinheiten als Acrylonitrilmonomereinheiten enthält.

6. Hochmolekulares Flockungsmittel nach Anspruch 1, worin das Polymermaterial mit hohem Molekulargewicht in einem Abfallmaterial von Polymerprodukten, die für andere Zwecke verwendet wurden, enthalten ist.

7. Verfahren zur Herstellung eines hochmolekularen Flockungsmittels, umfassend:
Vorsehen einer Menge Abfallmaterial von polymeren Produkten, enthaltend mindestens ein Polymermaterial mit hohem Molekulargewicht, das Copolymere von Acrylonitril und anderen Monomereinheiten darstellt, worin das Polymermaterial mit hohem Molekulargewicht mindestens eines ist von Styrol-Acrylonitrilharz, Acrylonitril-Butadien-Styrolharz, Acrylonitril-Styrol-Acrylharz, Acrylonitril-chloriertes Polyethylen-Styrolharz, Nitrilgummi und Acrylonitril-Butadien-Gummi mit einem Molekulargewicht von nicht weniger als 5.000;
Umsetzen des Polymermaterials mit hohem Molekulargewicht, enthaltend die Cynogruppe, mit einem Polyamin mit zwei oder mehr Aminogruppen; und
Einführen eines Molekülstrukturabschnitts, mit der Aminoverbindung, zugegeben zu mindestens einem Teil der Cyanogruppe, worin ein Imidazolinring als der Molekülstrukturabschnitt gebildet wird.

8. Verfahren zur Herstellung eines hochmolekularen Flockungsmittels nach Anspruch 7, worin man eines von: Einer anorganischen Säure, einer organischen Säure oder einem halogenierten Kohlenwasserstoff auf den Molekülstrukturabschnitt einwirken läßt, um zumindest einen Teil des Molekülstrukturabschnitts in ein Salz umzuwandeln.

9. Verfahren zur Herstellung eines hochmolekularen Flockungsmittels nach Anspruch 7, worin die Cyanogruppen in dem Polymermaterial mit hohem Molekulargewicht in einer Menge, entsprechend nicht weniger als 15 Mol-% der Gesamtmonomereinheiten, enthalten sind.

10. Verfahren zur Herstellung eines hochmolekularen Flockungsmittels nach Anspruch 7, worin das Polymermaterial mit hohem Molekulargewicht, enthaltend nicht weniger als 15 Mol-% der Gesamtmonomereinheiten, den Acrylonitrilmonomereinheiten entspricht.

11. Hochmolekulares Flockungsmittel nach den Ansprüchen 1 bis 6, worin ein hochmolekulares Material, enthalten in einem Abfallmaterial, das für andere Zwecke verwendet wurde, als das hochmolekulare Material verwendet wird.

12. Verfahren zur Wasseraufarbeitung, umfassend:
Einbringen eines hochmolekularen Flockungsmittels nach irgendeinem der Ansprüche 1 bis 6 in Wasser zur Aufarbeitung.

13. Verfahren zur Wasseraufarbeitung nach Anspruch 12, worin das hochmolekulare Flockungsmittel in Verbindung mit mindestens einem von einem nichtionischen hochmolekularen Flockungsmittel, einem anionischen hochmolekularen Flockungsmittel und einem kationischen hochmolekularen Flockungsmittel eingesetzt wird.

14. Verfahren zur Wasseraufarbeitung nach Anspruch 13, weiterhin umfassend nacheinander Einbringen des hochmolekularen Flockungsmittels und des anionischen hochmolekularen Flockungsmittels in das Wasser.

## Revendications

1. Floculant de masse moléculaire élevée ayant une portion de structure moléculaire composée d'une polyamine ayant deux ou plus groupes amino ajoutés à au moins une portion d'un groupe cyano contenu dans un matériau de masse moléculaire élevée, le matériau polymère de masse moléculaire élevée étant des copolymères d'acrylonitrile et d'autres motifs monomères, dans lequel le matériau polymère de masse moléculaire élevée est au moins l'un parmi une résine de styrène-acrylonitrile, une résine d'acrylonitrile-butadiène-styrène, une résine d'acrylonitrile-styrène-acrylique, une résine d'acrylonitrile-polyéthylène chloré-styrène, un caoutchouc de nitrile et un caoutchouc d'acrylonitrile-butadiène, dans lequel la portion de structure moléculaire à laquelle est ajoutée la polyamine comprend un cycle imidazoline.

2. Floculant de masse moléculaire élevée selon la revendication 1, dans lequel au moins une portion de la portion de structure moléculaire forme un sel avec l'un parmi un acide inorganique, un hydrocarbure halogéné et un ester d'acide sulfurique.

3. Floculant de masse moléculaire élevée selon la revendication 1, dans lequel ledit matériau polymère de masse moléculaire élevée a la masse moléculaire moyenne en masse non inférieure à 5 000.

4. Floculant de masse moléculaire élevée selon la revendication 1, dans lequel les groupes cyano sont contenus à pas moins de 15 % en mol des motifs monomères.

5. Floculant de masse moléculaire élevée selon la revendication 1, dans lequel le matériau polymère de masse moléculaire élevée contient un motif monomère acrylonitrile non inférieur à 15 % en mol des motifs monomères totaux.

6. Floculant de masse moléculaire élevée selon la revendication 1, dans lequel le matériau polymère de masse moléculaire élevée est contenu dans un matériau de déchet de produits polymères utilisés à d'autres fins.

7. Procédé de production d'un floculant de masse moléculaire élevée comprenant les étapes consistant à :
fournir une quantité de matériau de déchet de produits polymères contenant au moins un matériau polymère de masse moléculaire élevée qui est des copolymères d'acrylonitrile et d'autres motifs monomères dans lequel le matériau polymère de masse moléculaire élevée est au moins l'un parmi une résine de styrène-acrylonitrile, une résine d'acrylonitrile-butadiène-styrène, une résine d'acrylonitrile-styrène-acrylique, une résine d'acrylonitrile-polyéthylène chloré-styrène, un caoutchouc de nitrile et un caoutchouc d'acrylonitrile-butadiène ayant une masse moléculaire non inférieure à 5 000 ;
faire réagir ledit matériau polymère de masse moléculaire élevée contenant ledit groupe cyano avec une polyamine ayant deux ou plus groupes amino ; et
introduire une portion de structure moléculaire ayant ledit composé amino ajouté à au moins une portion dudit groupe cyano, dans lequel un cycle imidazoline est formé en tant que ladite portion de structure moléculaire.

8. Procédé de production d'un floculant de masse moléculaire élevée selon la revendication 7, dans lequel l'un parmi un acide inorganique, un acide organique et un hydrocarbure halogéné agit sur ladite portion de structure moléculaire pour convertir au moins une portion de la portion de la structure moléculaire en un sel.

9. Procédé de production d'un floculant de masse moléculaire élevée selon la revendication 7, dans lequel les groupes cyano sont contenus dans le matériau polymère de masse moléculaire élevée en une quantité correspondant à pas moins de 15 % en mol des motifs monomères totaux.

10. Procédé de production d'un floculant de masse moléculaire élevée selon la revendication 7, dans lequel le matériau polymère de masse moléculaire élevée contenant pas moins de 15 % en mol des motifs monomères totaux correspondent au motif monomère acrylonitrile.

11. Floculant de masse moléculaire élevée selon les revendications 1 à 6, dans lequel un matériau de masse moléculaire élevée contenu dans un matériau de déchet utilisé à d'autres fins est utilisé en tant que ledit matériau de masse moléculaire élevée.

12. Procédé de traitement de l'eau comprenant l'étape consistant à :
charger dans de l'eau à traiter, un floculant de masse moléculaire élevée selon l'une quelconque des revendications 1 à 6.

13. Procédé de traitement de l'eau selon la revendication 12, dans lequel ledit floculant de masse moléculaire élevée est utilisé conjointement avec au moins l'un parmi un floculant non ionique de masse moléculaire élevée, un floculant anionique de masse moléculaire élevée et un floculant cationique de masse moléculaire élevée.

14. Procédé de traitement de l'eau selon la revendication 13, comprenant en outre l'étape consistant à :
charger séquentiellement dans l'eau ledit floculant de masse moléculaire élevée et le floculant anionique de masse moléculaire élevée.
